# DEMANDE DE BREVET EUROPEEN

(11) **EP 2 455 174 A1**
(43) Date de publication de la demande: **23.05.2012**
(21) Numéro de dépôt: 11306534.6
(22) Date de dépôt: 22.11.2011
(51) Int. Cl.: B23D 21/04, B23D 33/02

(54) **Dispositif de coupe et/ou de chanfreinage d'un élément tubulaire et utilisation correspondante**

(30) Priorité: 22.11.2010 FR 1059596
(71) Demandeur: Saint-Gobain PAM, 54000 Nancy (FR)
(72) Inventeur: Bris, Jean-Jacques, 71620 BEY (FR); Genelot, Pierre, 54700 NORROY (FR); Lallement, Gilles, 54700 PORT SUR SEILLE (FR); Recordon, Denis, 71350 LA LOYERE (FR)
(74) Mandataire: Blot, Philippe Robert Emile

(57) **Abrégé**

Ce dispositif (1) de coupe et de chanfreinage d'un élément tubulaire (T) comporte des moyens de fixation (6) de l'élément tubulaire (T) et des moyens de coupe et de chanfreinage (5) de l'élément tubulaire (T). Le dispositif définit un axe de coupe et de chanfreinage (A-A), et comporte un bâti (3). Les moyens de coupe et de chanfreinage (5) comportent une unité de coupe et de chanfreinage (16) apte à être entraînée en rotation tout autour de l'élément tubulaire (T) afin de découper et/ou chanfreiner l'élément tubulaire (T), les moyens de fixation (6) étant adaptés pour maintenir l'élément tubulaire (T) dans une position immobile lors de la rotation de l'unité de coupe et de chanfreinage (16).

## Description

La présente invention se rapporte à un dispositif de coupe et/ou de chanfreinage d'un élément tubulaire, comportant :
- des moyens de fixation de l'élément tubulaire,
- des moyens de coupe et/ou de chanfreinage de l'élément tubulaire, le dispositif définissant un axe de coupe et de chanfreinage, et comportant un bâti, les moyens de coupe et/ou de chanfreinage comportant :
- une unité de coupe et/ou de chanfreinage apte à être entraînée en rotation tout autour de l'élément tubulaire afin de découper et/ou chanfreiner l'élément tubulaire, les moyens de fixation étant adaptés pour maintenir l'élément tubulaire dans une position immobile lors de la rotation de l'unité de coupe et/ou de chanfreinage,
les moyens de fixation comportant deux bras de serrage présentant chacun une extrémité articulée rotative selon un axe parallèle à l'axe de coupe et de chanfreinage, les bras de serrage étant aptes à être rapprochés l'un de l'autre pour serrer l'élément tubulaire en position immobile et à être écartés l'un de l'autre afin de libérer l'élément tubulaire,
chaque bras de serrage comportant une extrémité de serrage et les moyens de fixation comportant des moyens adaptés pour rapprocher ou éloigner les bras de serrage afin de serrer ou libérer l'élément tubulaire.

L'utilisation du dispositif selon l'invention est destinée notamment à faciliter l'emboîtage de cet élément tubulaire dans un autre élément tubulaire.

Lors de la pose de tuyaux d'adduction d'eau potable ou d'évacuation d'eaux usées, il est souvent nécessaire, sur chantier, de couper les tuyaux à une longueur déterminée, par exemple lors de changements de direction ou lors du raccordement d'un tuyau à une vanne. Puis, pour faciliter son insertion dans un tuyau adjacent en garantissant des efforts d'emboîtage limités, l'extrémité découpée est munie, à l'emplacement de la découpe, d'un chanfrein ménagé sur la surface extérieure.

La demande FR 2 820 191 décrit des exemples de tels tuyaux. Le tuyau découpé présente une extrémité dite «bout mâle» ou «bout uni» présentant une surface extérieure approximativement lisse, cette extrémité étant destinée à être emboîtée dans une extrémité dite « emboîture » ou «bout à emboîtement» d'un deuxième tuyau. Une garniture d'étanchéité annulaire est placée dans le bout à emboîtement pour étancher l'assemblage des deux tuyaux.

Afin de pouvoir assurer l'étanchéité de la jonction entre les extrémités respectives emboîtées des deux tuyaux, il est nécessaire que la découpe du bout uni soit « droite », c'est-à-dire réalisée de telle sorte à obtenir une extrémité découpée qui présente une face plane et transversale à l'axe du tuyau. L'obtention d'une coupe droite permet en outre de faciliter l'emboîtage des deux extrémités des tuyaux. Par ailleurs, la découpe du premier tuyau doit être réalisée de manière à ce que l'extrémité découpée présente une surface extérieure chanfreinée lisse, régulière et dépourvue d'irrégularités, de façon à ne pas endommager ou expulser la garniture d'étanchéité lors de son insertion dans le bout à emboîtement du deuxième tuyau.

Traditionnellement, les tuyaux sont découpés à l'aide d'un outil de coupe tel qu'une tronçonneuse thermique à disque, entraînée en rotation à grande vitesse, puis la surface extérieure des tuyaux ainsi découpés est chanfreinée à l'aide du même outil.

Cette solution présente de nombreux inconvénients. L'utilisation d'une tronçonneuse thermique manu-portable est peu aisée pour l'opérateur sur chantier, peut être à l'origine d'accidents corporels et se révèle peu précise concernant la découpe et le chanfrein. En particulier, lorsque le diamètre du tuyau est élevé, il est nécessaire de réaliser la découpe du tuyau en plusieurs étapes, après rotation du tuyau autour du dispositif de coupe. Ceci ne permet pas l'obtention d'une coupe droite du fait de l'apparition de décalages sur l'extrémité découpée provenant des différentes étapes de la découpe.

De plus, le chanfrein réalisé avec la tronçonneuse thermique sur la surface extérieure du tuyau découpé ne permet pas d'obtenir une surface chanfreinée suffisamment lisse, homogène et ayant une inclinaison suffisante pour ne pas endommager ou expulser la garniture d'étanchéité lors de l'emboîtage des tuyaux.

Par ailleurs, les tuyaux peuvent comporter un revêtement sensible à la chaleur sur leur surface intérieure, par exemple un revêtement thermoplastique, et la tronçonneuse thermique entraînée en rotation à grande vitesse provoque un échauffement important à l'extrémité du tuyau qui détériore localement ce revêtement.

L'invention vise à proposer un dispositif de coupe et de chanfreinage d'un élément tubulaire permettant d'obtenir une coupe droite de l'élément tubulaire, c'est-à-dire une coupe réalisée de telle sorte que l'extrémité découpée présente une face plane et transversale à l'axe de l'élément tubulaire.

Le dispositif doit également permettre de chanfreiner la surface extérieure de l'extrémité de l'élément tubulaire découpé de manière à éliminer les irrégularités de surface pour obtenir une surface lisse, régulière, et ainsi ne pas endommager la garniture d'étanchéité lors de l'introduction de l'extrémité chanfreinée dans l'emboîture du tuyau adjacent.

A cette fin, l'invention porte sur un dispositif de coupe et/ou de chanfreinage d'un élément tubulaire tel qu'indiqué ci-dessus, caractérisé en ce que ces moyens adaptés pour rapprocher ou éloigner les bras de serrage comportent une tige filetée et deux écrous de vissage au niveau des extrémités de serrage pour une rotation de la tige filetée par rapport aux écrous de vissage écartant ou rapprochant les bras de serrage l'un de l'autre.

Le dispositif peut également présenter une ou plusieurs des caractéristiques ci-dessous, considérées individuellement ou selon toutes les combinaisons techniquement possibles :
- les moyens de fixation et les moyens de coupe et/ou de chanfreinage sont portés par le bâti, les moyens de coupe et/ou de chanfreinage étant mobiles en rotation relativement au bâti ;
- les taraudages des deux écrous de vissage sont inversés et la tige filetée comporte deux zones distinctes dont les filetages sont inversés, le filetage de chaque zone étant adapté pour coopérer avec le taraudage d'un écrou respectif ;
- l'unité de coupe et/ou de chanfreinage comporte un outil de coupe et/ou de chanfreinage adapté pour venir au contact d'une surface extérieure de l'élément tubulaire en vue de couper et/ou de chanfreiner cet élément tubulaire, le dispositif définissant un axe perpendiculaire à un axe longitudinal de l'élément tubulaire;
- l'outil de coupe et/ou de chanfreinage comporte une portion de coupe pour la découpe de l'élément tubulaire et une portion de chanfreinage pour le chanfreinage de l'élément tubulaire;
- l'unité de coupe et/ou de chanfreinage comporte des moyens d'avancée adaptés pour faire avancer l'outil de coupe et/ou de chanfreinage radialement vers l'intérieur lors d'une rotation de l'outil de coupe et/ou de chanfreinage autour de l'axe, notamment les moyens d'avancée comprenant une couronne rotative dont la rotation autour de l'axe perpendiculaire à un axe longitudinal de l'élément tubulaire entraîne un déplacement de l'outil de coupe et/ou de chanfreinage radialement en direction de l'axe longitudinal de l'élément tubulaire;
- les moyens d'avancée comportent au moins une butée et au moins une contre-butée, et le contact entre la butée et la contre-butée lors de la rotation des moyens de coupe et/ou de chanfreinage autour de l'élément tubulaire entraîne l'avancée de l'outil de coupe et/ou de chanfreinage, notamment entraîne la rotation de la couronne rotative autour de l'axe ;
- l'unité de coupe et/ou de chanfreinage comporte également un capot de protection qui entoure l'outil de coupe et/ou de chanfreinage, et le capot de protection est monté sur l'unité de coupe et/ou de chanfreinage de manière à pouvoir être déplaçable entre une position de protection de l'outil et une position de dégagement de l'outil, de préférence le capot de protection étant sollicité élastiquement vers sa position de protection ;
- le capot de protection a la forme générale d'un cylindre centré sur l'axe perpendiculaire à un axe longitudinal de l'élément tubulaire ;
- les moyens de coupe et/ou de chanfreinage comportent des moyens d'actionnement manuels, afin d'entraîner l'unité de coupe et/ou de chanfreinage en rotation, notamment un cliquet et un levier d'actionnement ; et
- les moyens de coupe et/ou de chanfreinage comportent un moteur, notamment un moteur électrique, afin d'entraîner l'unité de coupe et/ou de chanfreinage en rotation.

L'invention a également pour objet l'utilisation d'un dispositif tel que défini ci-dessus, comprenant les étapes suivantes:
- fixation de l'élément tubulaire dans les moyens de fixation
- coupe de l'élément tubulaire avec les moyens de coupe et/ou de chanfreinage et/ou chanfreinage d'une extrémité extérieure de l'élément tubulaire avec les moyens de coupe et/ou de chanfreinage.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation schématique en perspective d'un dispositif de coupe et de chanfreinage conforme à l'invention,
- la figure 2 est une vue de face selon la flèche II du dispositif de la figure 1,
- la figure 3 est une vue en coupe selon la ligne III - III de la figure 2,

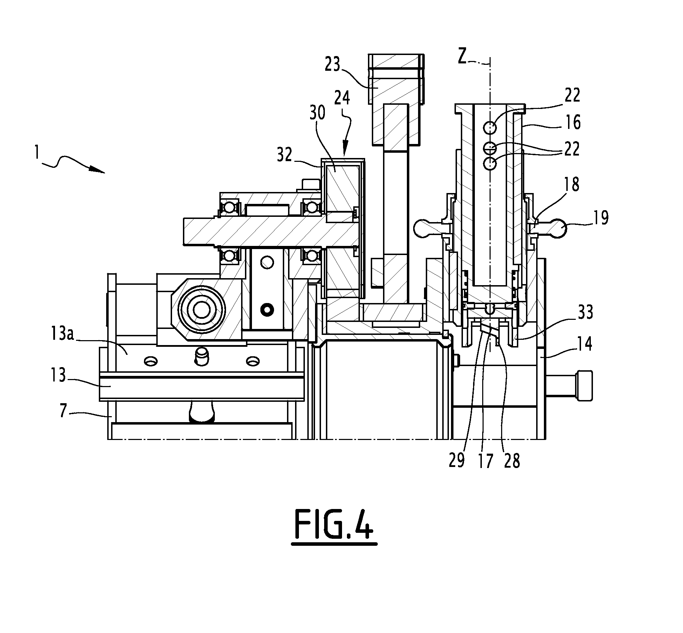

- la figure 4 est une vue partielle en coupe selon la ligne IV - IV de la figure 2,
- les figures 5 et 6 sont deux autres représentations schématiques en perspective du dispositif de la figure 1, respectivement de dos et de face,
- les figures 7 et 8 sont respectivement des vues en coupe du dispositif de la figure 1 sans et avec la présence d'un élément tubulaire d'un premier diamètre,
- les figures 9 et 10 sont respectivement des vues en coupe du dispositif de la figure 1 sans et avec la présence d'un élément tubulaire d'un deuxième diamètre, et
- les figures 11 et 12 sont respectivement des vues en coupe du dispositif de la figure 1 sans et avec la présence d'un élément tubulaire d'un troisième diamètre.

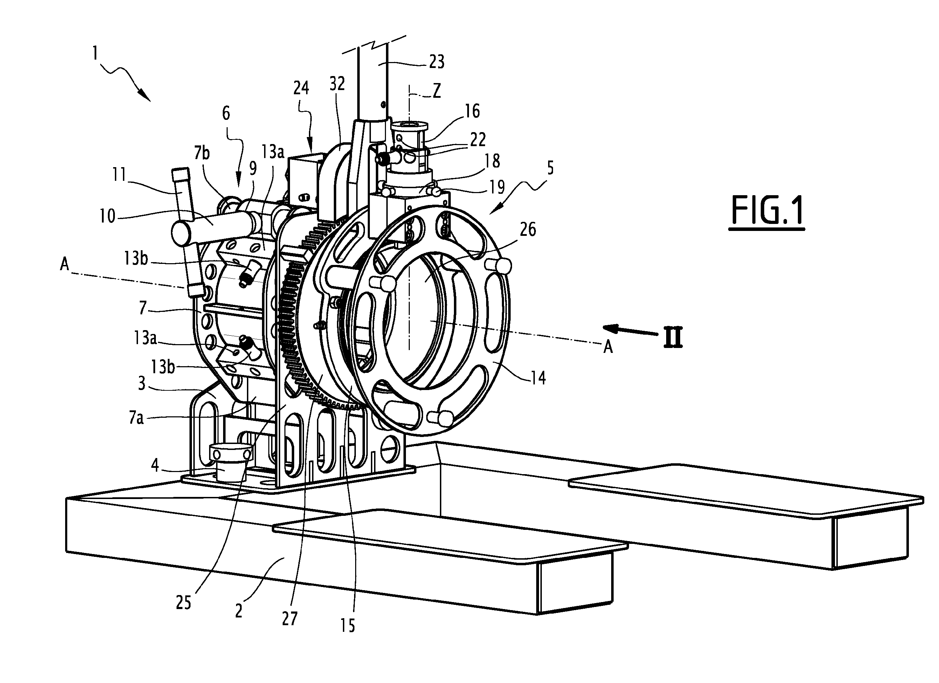

Le dispositif de coupe et de chanfreinage 1 représenté sur la figure 1 comporte une embase 2, posée par exemple à même le sol, sur laquelle est fixé un bâti 3 par l'intermédiaire de deux vis de fixation 4.

Des moyens de coupe et de chanfreinage 5 et des moyens de fixation 6 d'un élément tubulaire T sont disposés sur le bâti 3. Ces moyens de coupe et de chanfreinage 5 et moyens de fixation 6 sont situés de part et d'autre d'une paroi 25 du bâti 3.

Le dispositif de coupe et de chanfreinage 1 définit un axe de coupe et de chanfreinage A-A. Dans ce qui suit, les expressions «axialement», « radialement », et circonférentiellement » seront utilisées par rapport à l'axe A - A.

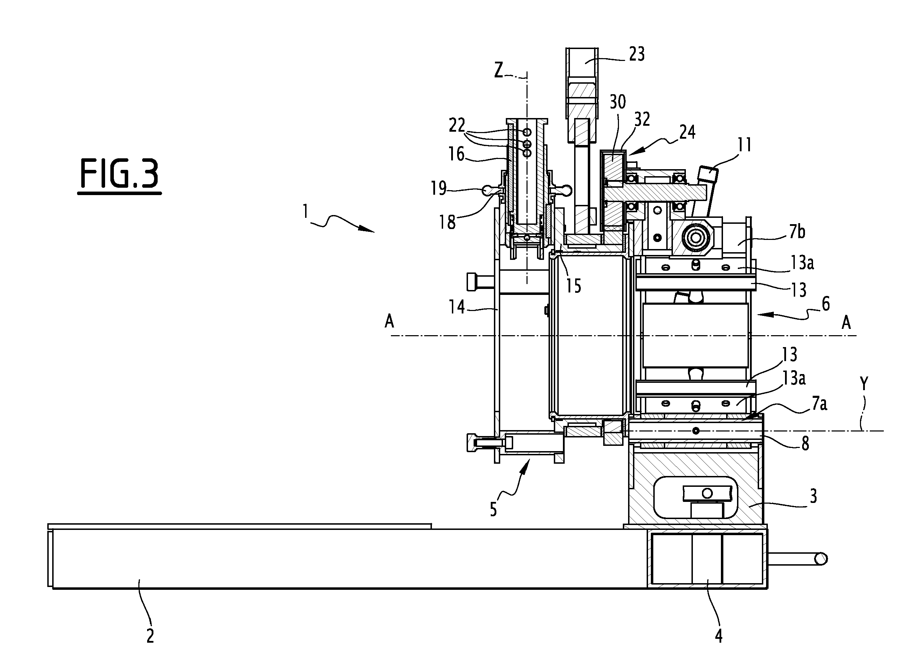

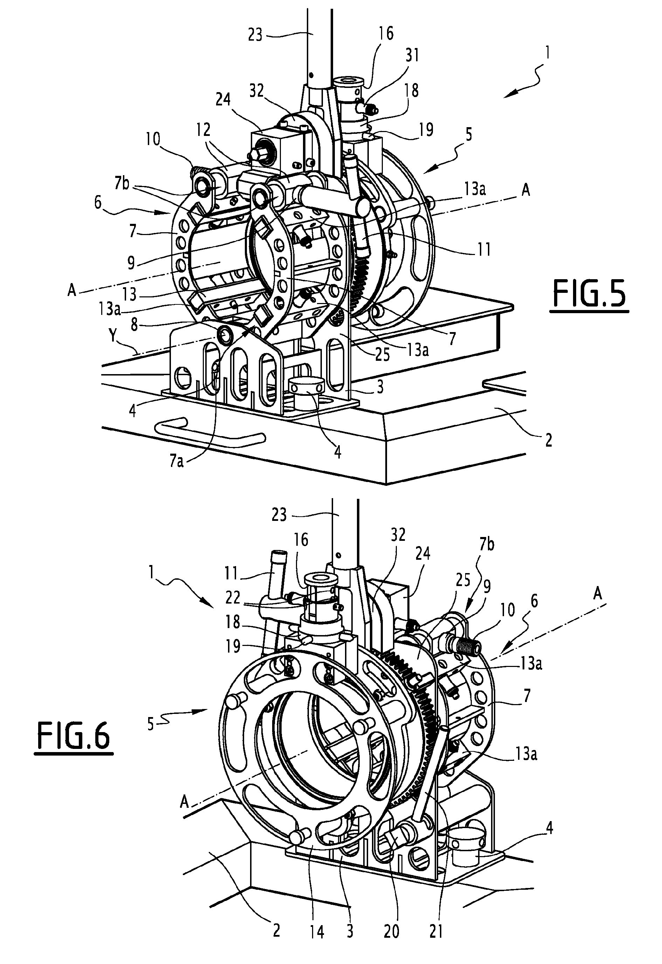

Les moyens de fixation 6 comportent deux bras de serrage 7, une tige filetée 10 et deux écrous de vissage 12. Les bras de serrage 7 comportent chacun une extrémité 7a articulée sur un arbre rectiligne 8 du bâti 3, de manière à ce que chaque bras de serrage 7 puisse être mis en rotation autour d'un axe propre Y de l'arbre 8, visible sur les figures 3 et 5. L'autre extrémité 7b est une extrémité de serrage de chacun des bras de serrage 7. Les deux écrous de vissage 12 sont solidaires chacun d'une extrémité 7b de serrage et comportent chacun un orifice 9 permettant l'insertion de la tige filetée 10. La tige filetée 10 est munie d'une poignée de vissage 11 permettant, lors de sa rotation dans un premier sens de rapprocher les bras de serrage 7 et lors de sa rotation dans un deuxième sens d'éloigner les bras de serrage 7 l'un de l'autre par coopération entre la tige filetée 10 et les écrous de vissage 12. Avantageusement, pour favoriser un serrage concentrique des bras 7 autour de l'élément tubulaire T, les taraudages des deux écrous de vissage 12 sont inversés et la tige filetée 10 comporte deux zones distinctes dont les filetages sont inversés, le filetage de chaque zone étant adapté pour coopérer avec le taraudage d'un écrou 12 respectif.

En variante, la tige filetée 10 et les écrous de vissage 12 peuvent être remplacés par un autre moyen adapté pour rapprocher ou éloigner les bras 7 afin de serrer ou libérer un élément tubulaire.

Chaque bras de serrage 7 comporte de plus deux supports 13a portant chacun un mors 13 destiné à venir en appui sur la surface extérieure de l'élément tubulaire T lors de sa fixation entre les bras de serrage 7. Les mors 13 présentent une surface d'appui sur l'élément tubulaire qui est lisse, notamment une surface concave pour épouser la surface extérieure de l'élément tubulaire. En variante, les mors 13 présentent une surface crantée pour améliorer la fixation de l'élément tubulaire entre les bras de serrage 7.

Les bras de serrage 7 sont avantageusement adaptés à une gamme de diamètres de l'élément tubulaire destiné à être coupé et chanfreiné par le dispositif 1. En revanche, les dimensions des mors 13 sont déterminées en fonction du diamètre de l'élément tubulaire à travailler. A cet effet, les mors 13 sont montés de façon amovible sur leurs supports 13a, de façon à pouvoir être enlevés et remplacés par un autre jeu de mors 13 lorsque le diamètre de l'élément tubulaire change.

Chaque mors est par exemple fixé d'une manière libérable sur le support 13a correspondant par un goujon 13b.

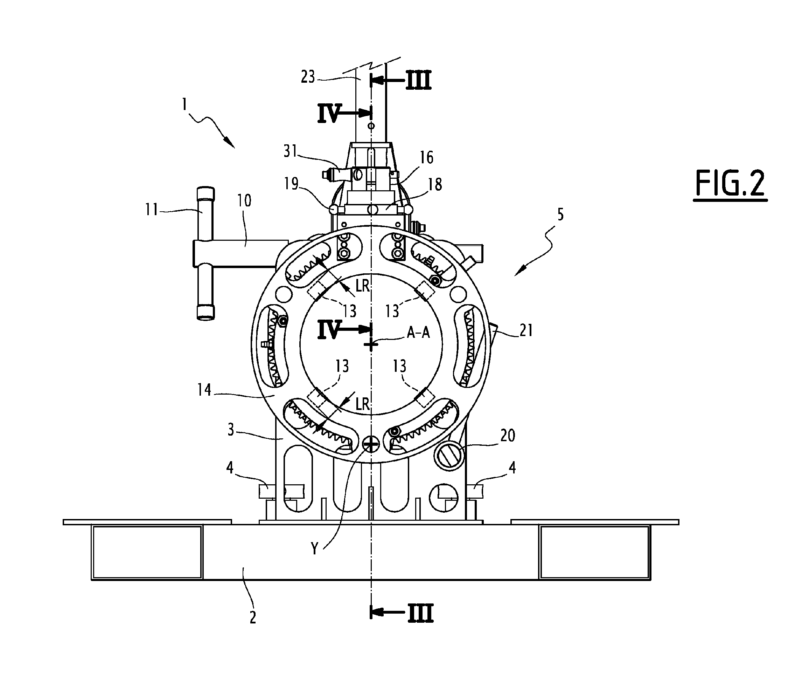

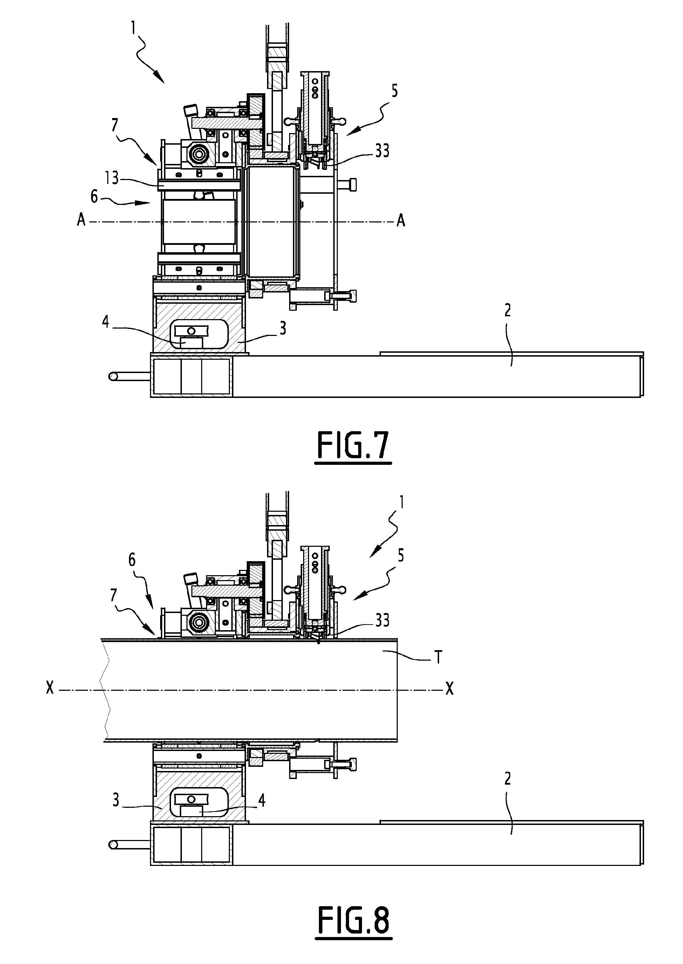

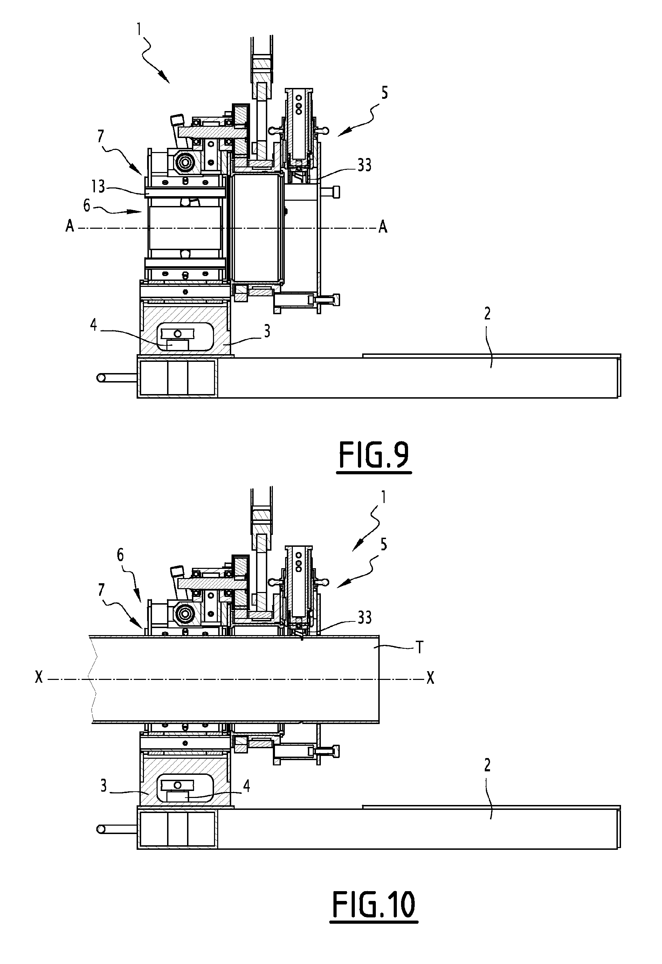

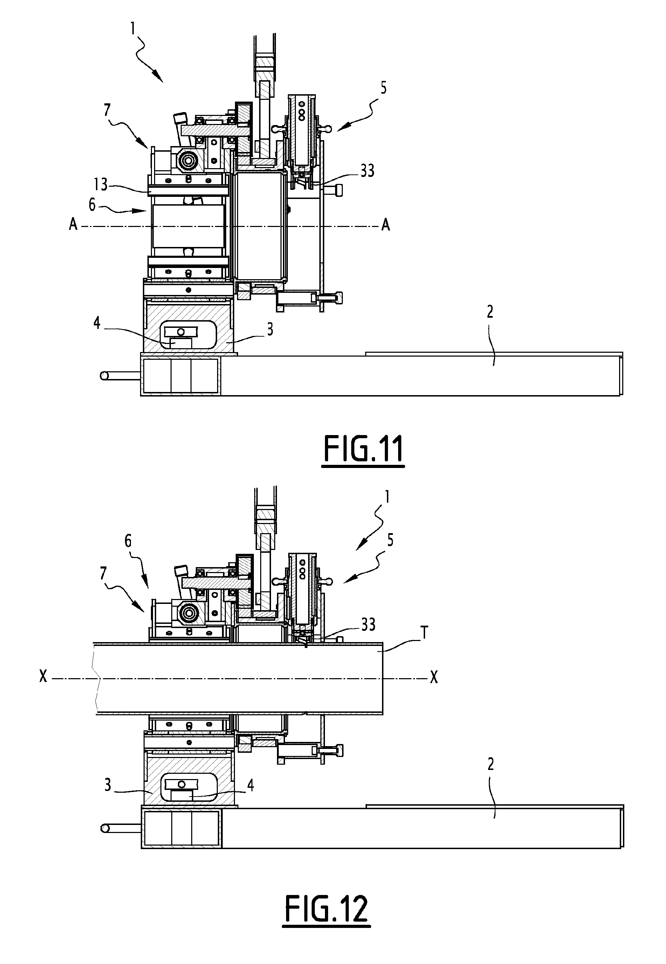

Les figures 7, 9 et 11 représentent par exemple en coupe la configuration du dispositif 1 selon l'invention sans la présence de l'élément tubulaire T pour des diamètres respectifs de l'élément tubulaire T de 125 mm, 110 mm et 90 mm. Les figures 8, 10 et 12 représentent cette même configuration du dispositif 1 selon l'invention avec la présence de l'élément tubulaire T pour ces diamètres respectifs de l'élément tubulaire T de 125 mm, 110 mm et 90 mm. Un jeu différent de mors 13 est prévu pour chaque diamètre de l'élément tubulaire T. Chaque mors 13 a une largeur radiale LR (Fig. 2) par rapport à un axe central X de l'élément tubulaire à couper. Cette largeur radiale LR est différente d'un jeu de mors 13 à l'autre et varie donc en fonction du diamètre de l'élément tubulaire T à découper et chanfreiner.

L'invention a en outre pour objet un dispositif de coupe ayant un premier jeu de mors 13 ayant une première largeur radiale LR et un deuxième jeu de mors 13 ayant une deuxième largeur radiale différente de la première largeur radiale LR.

De même, comme il est précisé dans ce qui suit, le choix du gabarit 14 et le positionnement de l'unité de coupe et de chanfreinage 16 peuvent être adaptés à chaque diamètre de l'élément tubulaire T.

Les moyens de coupe et de chanfreinage 5 sont montés sur le bâti 3 de manière rotative selon l'axe X de l'élément tubulaire placé au sein du dispositif 1.

Les moyens de coupe et de chanfreinage 5 comportent un gabarit 14 de forme généralement annulaire qui présente une ouverture circulaire interne 26 pour le passage de l'élément tubulaire T. Le diamètre de l'ouverture interne 26 du gabarit 14 est adapté au diamètre extérieur de l'élément tubulaire, étant sensiblement égal au diamètre extérieur de l'élément tubulaire. Le gabarit 14 permet, en combinaison avec les moyens de fixation 6, de maintenir l'élément tubulaire dans une position de serrage dans laquelle l'axe A - A et l'axe X coïncident. L'élément tubulaire est donc centré lors de la découpe et du chanfreinage. Plus précisément, une fois l'élément tubulaire placé au sein du dispositif 1, entre les bras de serrage 7, le gabarit 14 sert de contre-appui, la surface extérieure de l'élément tubulaire épousant le contour de l'ouverture interne 26 du gabarit 14.

Le diamètre extérieur de l'élément tubulaire est compris entre 80 et 130 mm, par exemple entre 90 et 125 mm, et est par exemple égal à 90 mm, 110 mm ou 125 mm.

En conséquence, le diamètre de l'ouverture intérieure 26 est de 90 mm, 110 mm ou de 125 mm, éventuellement augmenté d'un jeu nécessaire qui est compris entre 1 mm et 5 mm.

Pour chaque diamètre de tuyau à traiter, le dispositif de découpe et de chanfreinage comprend un gabarit 14 adéquat. Le dispositif de découpe et de chanfreinage comprend donc au moins un premier gabarit 14 muni d'une ouverture 26 ayant un premier diamètre et un deuxième gabarit muni d'une ouverture 26 ayant un deuxième diamètre qui est distinct du premier diamètre.

Les moyens de coupe et de chanfreinage 5 comportent également un corps rotatif 15, solidaire d'une roue d'engrenage 27. Le corps rotatif 15 et la roue d'engrenage 27 sont mobiles en rotation autour de l'axe A-A du bâti 3. L'ensemble formé par la roue d'engrenage 27 et le corps rotatif 15 peut être entraîné en rotation par rapport au bâti 3, autour de l'axe X de l'élément tubulaire. Le gabarit 14 est solidaire du corps rotatif 15.

Par ailleurs, une unité de coupe et de chanfreinage 16 est fixée sur le corps rotatif 15. L'unité de coupe et de chanfreinage 16 est disposée axialement entre le gabarit 14 et le corps rotatif 15. L'unité de coupe et de chanfreinage 16 comporte un outil de coupe et de chanfreinage 17 adapté à découper et chanfreiner l'élément tubulaire. L'outil de coupe et de chanfreinage 17 présente une portion de coupe 28 adaptée pour réaliser une coupe droite de l'élément tubulaire, et une portion de chanfreinage 29 adaptée pour chanfreiner la surface extérieure de l'élément tubulaire découpé. La portion de coupe 28 a une arête de coupe parallèle à l'axe A-A. La portion de coupe 28 fait radialement saillie de la portion de chanfreinage 29, sur une distance supérieure à l'épaisseur de paroi de l'élément tubulaire à couper.

La portion de chanfreinage 29 a une arête de chanfreinage, notamment rectiligne, s'étendant obliquement par rapport à l'axe A-A. L'arête de chanfreinage s'éloigne de l'axe A-A dans le sens axial s'éloignant de la portion de coupe 28. L'inclinaison de l'arête de chanfreinage par rapport à l'axe A-A est comprise entre 5° et 45°. L'arête de chanfreinage et l'arête de coupe sont par exemple reliées par une arête intermédiaire en arc de cercle, permettant d'obtenir sur l'élément tubulaire T un chanfrein dépourvu de toute arête vive susceptible de détériorer la garniture d'étanchéité lors de l'insertion de l'élément tubulaire T dans un bout à emboîtement adjacent. L'outil de coupe et de chanfreinage 17 est par exemple réalisé en métal, notamment en acier.

L'unité de coupe et de chanfreinage 16 comporte encore une couronne rotative 18, destinée à être entraînée en rotation autour d'un axe vertical Z de l'unité de coupe et de chanfreinage 16. L'axe vertical Z est perpendiculaire à l'axe X longitudinal de l'élément tubulaire. La rotation de la couronne 18, par exemple d'un quart de tour, autour de l'axe Z fait avancer l'outil de coupe et de chanfreinage 17 vers l'axe A-A et donc en direction de la surface de l'élément tubulaire T à couper et à chanfreiner lors de l'utilisation. Pour ce faire, la couronne rotative 18 comporte dans le cas présent quatre plots 19, adaptés pour venir au contact d'une languette 20 du bâti 3 lors de la rotation du corps rotatif 15 autour de l'axe A-A. Le contact entre un plot 19 et la languette 20 lors de la rotation, provoque la rotation de la couronne 18, par exemple d'un quart de tour, ce qui entraîne automatiquement le déplacement de l'outil de coupe et de chanfreinage 17 radialement vers l'axe X de l'élément tubulaire T. Ainsi, à chaque tour de l'unité de coupe et de chanfreinage 16 autour de l'élément tubulaire T, la couronne 18 tourne d'un quart de tour autour de l'axe Z et donne alors à l'outil de coupe et de chanfreinage 17 une profondeur de passe supplémentaire.

Les plots 19 sont donc des butées tandis que la languette 20 est une contre-butée associée. La couronne rotative 18, les plots 19 et la languette 20 sont donc des moyens d'avancée adaptés pour faire avancer l'outil de coupe et de chanfreinage 17 radialement vers l'axe A-A lors d'un déplacement de l'outil de coupe et de chanfreinage autour de l'axe A-A.

En variante, la couronne rotative 18, les plots 19 et la languette 20 peuvent être remplacés par d'autres moyens d'avancée qui remplissent la même fonction.

La languette 20 est déplaçable à l'aide d'une poignée 21 entre une position active, dans laquelle les plots 19 entrent en contact avec la languette 20 et une position inactive, dans laquelle tous les plots 19 restent hors de contact avec la languette 20. Dans ce dernier cas, l'outil de coupe et de chanfreinage 17 n'est pas avancé automatiquement et doit donc être avancé manuellement.

L'unité de coupe et de chanfreinage 16 comporte aussi des moyens d'ajustage qui, en fonction du diamètre de l'élément tubulaire à couper, permettent d'ajuster de façon optimale le positionnement initial de l'outil de coupe et de chanfreinage 17 relativement à la surface extérieure de l'élément tubulaire. Dans le cas présent, ces moyens d'ajustage comprennent trois orifices traversants 22 adaptés pour recevoir une goupille 31 de fixation, les trois orifices 22 étant disposés le long de l'axe Z et perpendicairement à l'axe Z. Ainsi, en fonction du diamètre de l'élément tubulaire T à découper, la goupille 31 est mise en place dans l'un de ces orifices, et plus précisément dans l'orifice 22 qui permet de placer l'outil de coupe et de chanfreinage 17 au plus près de la surface extérieure de l'élément tubulaire T.

L'unité de coupe et de chanfreinage 16 comporte également un capot de protection 33 qui entoure l'outil de coupe et de chanfreinage 17 et évite ainsi d'endommager celui-ci lors de la mise en place de l'élément tubulaire T dans le dispositif 1. Le capot de protection 33 a la forme générale d'un cylindre centré sur l'axe Z et est monté sur l'unité de coupe et de chanfreinage 16 de manière à pouvoir être déplaçable entre une position de protection de l'outil 17 (cf. par exemple Figure 7) et une position de dégagement de l'outil 17 (cf. par exemple Figure 8). Le capot de protection 33 est sollicité élastiquement vers sa position de protection.

Les moyens de coupe et de chanfreinage 5 comportent encore un cliquet et un levier d'actionnement 23, sur lequel un opérateur agit afin de manuellement mettre en rotation autour de l'axe A-A l'ensemble formé par la roue d'engrenage 27, le corps rotatif 15 et le gabarit 14, et par voie de conséquence pour mettre en rotation l'outil de coupe et de chanfreinage 17 autour de l'élément tubulaire T dont il permet ainsi la découpe puis le chanfreinage.

Le dispositif de coupe et de chanfreinage 1 comporte encore des moyens de mise en rotation automatique 24 solidaires du bâti 3. Les moyens de mise en rotation automatique 24 comportent un moteur électrique (non visible) et une roue d'engrenage 30 logée dans un boîtier 32. La roue d'engrenage est entraînée en rotation par l'intermédiaire du moteur électrique qui est par exemple un dispositif de vissage électrique. De la sorte, il est possible d'entraîner en rotation de façon automatique la roue d'engrenage 27, *via* la rotation de la roue d'engrenage 30 du boîtier 32, et ainsi l'outil de coupe et de chanfreinage 17, et ce sans l'aide du levier d'actionnement 23.

Le dispositif 1 selon le mode de réalisation représenté comporte ainsi à la fois un système de mise en rotation manuelle à l'aide du levier d'actionnement 23 et un système de mise en rotation automatique à l'aide des moyens de mise en rotation automatique 24. Toutefois, l'invention n'est pas limitée à ce mode de réalisation. En particulier, le dispositif 1 peut ne comporter qu'un seul type de moyen de mise en rotation, manuelle ou automatique.

Le fonctionnement du dispositif de coupe et de chanfreinage 1 ci-dessus va maintenant être décrit.

Un jeu de bras de serrage 7 ou un jeu de mors 13 est choisi en fonction du diamètre de l'élément tubulaire T que l'on souhaite découper et chanfreiner à l'aide du dispositif 1 selon l'invention. De même, un gabarit 14 est choisi de manière à ce que l'ouverture centrale 26 du gabarit 14 présente un diamètre adapté au diamètre de l'élément tubulaire.

L'élément tubulaire est placé à l'intérieur du dispositif 1, l'élément tubulaire étant introduit du côté des moyens de fixation 6 par son extrémité dite « bout uni », destinée à être découpée et chanfreinée. L'élément tubulaire est positionné au sein du dispositif 1 de manière à reposer à la fois sur le gabarit 14 et entre les bras de serrage 7.

Un opérateur actionne la poignée de vissage 11 de manière à rapprocher les bras de serrage 7 pour maintenir l'élément tubulaire dans une position fixe centrée.

L'opérateur agit sur l'unité de coupe et de chanfreinage 16 pour positionner l'outil de coupe et de chanfreinage 17 au plus près de la surface extérieure de l'élément tubulaire à découper. Le positionnement initial de l'outil de coupe et de chanfreinage 17 peut avantageusement se faire par insertion de la goupille 31 dans l'orifice 22 adéquat de l'unité de coupe et de chanfreinage 16.

L'opérateur agit alors sur le levier d'actionnement 23 en faisant des mouvements de va-et-vient qui entraînent en rotation les moyens de coupe et de chanfreinage 5, et en particulier l'outil de coupe et de chanfreinage 17 autour de l'élément tubulaire T. Lors de la rotation, l'outil de coupe et de chanfreinage 17 découpe l'élément tubulaire par l'intermédiaire de la portion de coupe 28, puis chanfreine la surface extérieure de l'élément tubulaire par l'intermédiaire de la portion de chanfreinage 29. Parallèlement, lors de la rotation des moyens de coupe et de chanfreinage 5 autour de l'élément tubulaire, les plots 19 de la couronne rotative 18 entrent en contact avec la languette 20, provoquant ainsi la rotation d'un quart de tour de la couronne rotative 18 selon l'axe Z et donc le déplacement de l'outil de coupe et de chanfreinage 17 radialement vers l'axe X de l'élément tubulaire T. La rotation de la couronne rotative 18 permet de faire avancer progressivement l'outil de coupe et de chanfreinage 17 en direction de l'axe longitudinal X de l'élément tubulaire, et donc de découper et de chanfreiner en totalité l'élément tubulaire T.

En variante à l'actionnement du levier 23 par l'opérateur, ce dernier raccorde un dispositif de vissage électrique, notamment du type visseuse électrique, aux moyens de mise en rotation automatique 24, pour entraîner en rotation les moyens de coupe et de chanfreinage 5 autour de l'élément tubulaire de façon automatique.

Un contrôle visuel par l'opérateur de la surface de l'élément tubulaire découpé et chanfreiné permet de déterminer le moment où la rotation de l'outil de coupe et de chanfreinage 17 autour de l'élément tubulaire doit être interrompue.

Le dispositif de coupe et de chanfreinage 1 décrit ci-dessus présente de multiples avantages.

En version manuelle, la coupe et le chanfreinage de l'élément tubulaire s'effectuent en toute sécurité à l'aide d'un outil de coupe et de chanfreinage qui est placé au sein du dispositif et donc difficilement accessible pour un utilisateur, de sorte que la sécurité du dispositif est fortement augmentée en comparaison avec un dispositif de coupe traditionnel utilisant une tronçonneuse thermique à disque entraînée en rotation à grande vitesse.

Le dispositif selon l'invention est avantageux d'un point de vue ergonomique, car l'opérateur peut adopter une position debout pour actionner le dispositif de coupe et de chanfreinage, ce qui facilite grandement son travail. L'option d'actionnement manuel de l'outil de coupe et de chanfreinage se révèle par ailleurs silencieuse en comparaison avec un dispositif de coupe traditionnel tel qu'une tronçonneuse thermique.

Le dispositif selon l'invention permet également d'entraîner en rotation l'outil de coupe et de chanfreinage à une vitesse nettement plus faible que celle des dispositifs de coupe connus, ce qui n'engendre pas ou peu d'élévation locale de température susceptible de détériorer un revêtement intérieur de l'élément tubulaire, notamment un revêtement thermoplastique sur la surface intérieure de l'élément tubulaire.

Le dispositif selon l'invention permet en outre de réaliser une coupe droite et un chanfrein de l'élément tubulaire très régulier, du fait de la rotation continue de l'outil de coupe et de chanfreinage autour de l'élément tubulaire.

Les moyens de fixation du dispositif selon l'invention permettent de plus d'obtenir un centrage optimal de l'élément tubulaire par rapport à l'outil de coupe et de chanfreinage.

Par ailleurs, le dispositif selon l'invention est également adapté pour uniquement chanfreiner l'extrémité d'un élément tubulaire qui dispose déjà d'une surface frontale plane et perpendiculaire à l'axe X. De même, le dispositif selon l'invention est adapté pour uniquement couper l'extrémité de l'élément tubulaire de façon à créer une surface frontale de l'élément tubulaire qui est plane et perpendiculaire à l'axe X, mais sans effectuer de chanfreinage.

## Revendications

1. Dispositif (1) de coupe et/ou de chanfreinage d'un élément tubulaire (T), comportant :
- des moyens de fixation (6) de l'élément tubulaire (T),
- des moyens de coupe et/ou de chanfreinage (5) de l'élément tubulaire (T), le dispositif définissant un axe de coupe et de chanfreinage (A-A), et comportant un bâti (3), les moyens de coupe et/ou de chanfreinage (5) comportant :
- une unité de coupe et/ou de chanfreinage (16) apte à être entraînée en rotation tout autour de l'élément tubulaire (T) afin de découper et/ou chanfreiner l'élément tubulaire (T), les moyens de fixation (6) étant adaptés pour maintenir l'élément tubulaire (T) dans une position immobile lors de la rotation de l'unité de coupe et/ou de chanfreinage (16),
les moyens de fixation (6) comportant deux bras de serrage (7) présentant chacun une extrémité articulée (7a) rotative selon un axe (Y) parallèle à l'axe de coupe et de chanfreinage, les bras de serrage (7) étant aptes à être rapprochés l'un de l'autre pour serrer l'élément tubulaire en position immobile et à être écartés l'un de l'autre afin de libérer l'élément tubulaire,
chaque bras de serrage (7) comportant une extrémité de serrage (7b) et les moyens de fixation (6) comportant des moyens adaptés pour rapprocher ou éloigner les bras de serrage (7) afin de serrer ou libérer l'élément tubulaire, **caractérisé en ce que** ces moyens adaptés pour rapprocher ou éloigner les bras de serrage comportent une tige filetée (10) et deux écrous de vissage (12) au niveau des extrémités de serrage (7b) pour une rotation de la tige filetée par rapport aux écrous de vissage (12) écartant ou rapprochant les bras de serrage (7) l'un de l'autre.

2. Dispositif selon la revendication 1, **caractérisé en ce que** les moyens de fixation (6) et les moyens de coupe et/ou de chanfreinage (5) sont portés par le bâti (3), les moyens de coupe et/ou de chanfreinage (5) étant mobiles en rotation relativement au bâti (3).

3. Dispositif selon la revendication 1 ou 2, **caractérisé en ce que** les taraudages des deux écrous de vissage (12) sont inversés et la tige filetée (10) comporte deux zones distinctes dont les filetages sont inversés, le filetage de chaque zone étant adapté pour coopérer avec le taraudage d'un écrou (12) respectif.

4. Dispositif selon l'une quelconque des revendications précédentes, **caractérisé en ce que** l'unité de coupe et/ou de chanfreinage (16) comporte un outil de coupe et/ou de chanfreinage (17) adapté pour venir au contact d'une surface extérieure de l'élément tubulaire (T) en vue de couper et/ou de chanfreiner cet élément tubulaire, le dispositif définissant un axe (Z) perpendiculaire à un axe longitudinal (X) de l'élément tubulaire (T).

5. Dispositif selon la revendication précédente, **caractérisé en ce que** l'outil de coupe et/ou de chanfreinage (17) comporte une portion de coupe (28) pour la découpe de l'élément tubulaire (T) et une portion de chanfreinage (29) pour le chanfreinage de l'élément tubulaire (T).

6. Dispositif selon la revendication 4 ou 5, **caractérisé en ce que** l'unité de coupe et/ou de chanfreinage (16) comporte des moyens d'avancée adaptés pour faire avancer l'outil de coupe et/ou de chanfreinage (17) radialement vers l'intérieur lors d'une rotation de l'outil de coupe et/ou de chanfreinage (17) autour de l'axe (A-A), notamment les moyens d'avancée comprenant une couronne rotative (18) dont la rotation autour de l'axe (Z) perpendiculaire à un axe longitudinal (X) de l'élément tubulaire (T) entraîne un déplacement de l'outil de coupe et/ou de chanfreinage (17) radialement en direction de l'axe longitudinal (X) de l'élément tubulaire (T).

7. Dispositif selon la revendication 6, **caractérisé en ce que** les moyens d'avancée comportent au moins une butée (19) et au moins une contre-butée (20), et en ce le contact entre la butée (19) et la contre-butée (20) lors de la rotation des moyens de coupe et/ou de chanfreinage (5) autour de l'élément tubulaire (T) entraîne l'avancée de l'outil de coupe et/ou de chanfreinage, notamment entraîne la rotation de la couronne rotative (18) autour de l'axe (Z).

8. Dispositif selon l'une quelconque des revendications 4 à 7, **caractérisé en ce que** l'unité de coupe et/ou de chanfreinage (16) comporte également un capot de protection (33) qui entoure l'outil de coupe et/ou de chanfreinage (17), et **en ce que** le capot de protection est monté sur l'unité de coupe et/ou de chanfreinage (16) de manière à pouvoir être déplaçable entre une position de protection de l'outil (17) et une position de dégagement de l'outil (17), de préférence le capot de protection (33) étant sollicité élastiquement vers sa position de protection.

9. Dispositif selon la revendication 8, **caractérisé en ce que** le capot de protection (33) a la forme générale d'un cylindre centré sur l'axe (Z) perpendiculaire à un axe longitudinal (X) de l'élément tubulaire (T).

10. Dispositif selon l'une quelconque des revendications précédentes, **caractérisé en ce que** les moyens de coupe et/ou de chanfreinage (5) comportent des moyens d'actionnement manuels, afin d'entraîner l'unité de coupe et/ou de chanfreinage (16) en rotation, notamment un cliquet et un levier d'actionnement (23).

11. Dispositif selon l'une quelconque des revendications précédentes, **caractérisé en ce que** les moyens de coupe et/ou de chanfreinage (5) comportent un moteur, notamment un moteur électrique, afin d'entraîner l'unité de coupe et/ou de chanfreinage (16) en rotation.

12. Utilisation d'un dispositif selon l'une quelconque des revendications précédentes, comprenant les étapes suivantes:
- fixation de l'élément tubulaire (T) dans les moyens de fixation (6)
- coupe de l'élément tubulaire (T) avec les moyens de coupe et/ou de chanfreinage (5) et/ou chanfreinage d'une extrémité extérieure de l'élément tubulaire (T) avec les moyens de coupe et/ou de chanfreinage.
